# FASCICULE DE BREVET EUROPEEN

(11) **EP 0 591 023 B1**
(45) Date de publication et mention de la délivrance du brevet: **20.11.1996**
(21) Numéro de dépôt: 93402251.8
(22) Date de dépôt: 16.09.1993
(51) Int. Cl.: F41G 1/35, G02B 26/04, G02B 23/14

(54) **Dispostif laser à visée optique avec occultation alternative du rayon laser/de visée**
Optische Laserzielvorrichtung mit wechselnder Abdunklung des Laser- und Beobachtungsstrahlenganges
Optical laser aiming device with alternative masking of the laser and observation beam

(30) Priorité: 28.09.1992 FR 9211525
(43) Date de publication de la demande: 06.04.1994
(73) Titulaire: AEROSPATIALE Société Nationale Industrielle, 75781 Paris Cédex 16 (FR)
(72) Inventeur: Lebrun, Luc, F-91370 Verrières le Buisson (FR)
(74) Mandataire: Bonnetat, Christian

(56) Documents cités:
- DE-A- 3 234 289
- DE-B- 1 132 742
- US-A- 4 684 796
- US-A- 5 052 801
- PATENT ABSTRACTS OF JAPAN vol. 10, no. 76 (P-440) 26 Mars 1986 & JP-A-60 216 323 ( NISSAN JIDOSHA ) 29 Octobre 1985

## Description

La présente invention concerne les dispositifs laser à visée optique assurant la protection des yeux des opérateurs qui utilisent ces dispositifs.

On sait que de nombreux dispositifs laser, par exemple armes laser, télémètres, appareils chirurgicaux, ... comportent un système de visée permettant à un opérateur de diriger le faisceau laser dans une direction précise.

De tels dispositifs peuvent être extrêmement dangereux pour les yeux de l'opérateur, étant donné que la lumière émise par le laser peut être renvoyée en direction du système de visée, après avoir été réfléchie par un objet se trouvant sur la trajectoire du faisceau.

Ce danger est d'autant plus important que l'énergie de la source laser est élevée et que l'opérateur utilise un système de visée muni d'une optique ayant pour effet de collecter une quantité d'énergie plus importante que l'oeil nu.

De façon connue, on peut éviter ce danger en utilisant un obturateur susceptible d'occulter la visée de l'opérateur pendant le tir laser.

Un tel dispositif connu présente l'inconvénient d'interrompre la visée à chaque tir. Aussi, dans le cas où l'opérateur désire effectuer plusieurs tirs laser consécutifs, il n'est pas en mesure de vérifier si le faisceau reste pointé dans la bonne direction entre deux tirs, un léger écart de positionnement du dispositif laser pouvant modifier la direction du faisceau entre les tirs. Ceci nécessite par conséquent, de la part de l'opérateur, une nouvelle visée après chaque tir laser. Il est alors pratiquement impossible d'effectuer avec précision un tir en rafale.

La présente invention a pour but de perfectionner un tel dispositif connu à obturateur tout en permettant une visée continue et en protégeant l'oeil de l'opérateur. Elle est particulièrement intéressante pour les dispositifs destinés au tir en rafale.

A cette fin, selon l'invention, le dispositif laser comportant :
- une source laser susceptible d'émettre un faisceau laser ;
- un système optique de visée, traversé par un faisceau de visée, destiné à permettre à un opérateur de diriger ledit faisceau laser vers une cible ;
- un dispositif de commande susceptible de déclencher ladite source laser en vue d'un tir, commandé par un organe d'actionnement, à la disposition dudit opérateur ; et
- un élément mobile susceptible d'occulter ledit faisceau de visée pendant un tir laser ;
caractérisé en ce que ledit élément mobile est susceptible d'occulter également ledit faisceau laser lorsque le faisceau de visée n'est pas occulté par l'élément mobile et en ce qu'il occulte alternativement ledit faisceau laser et ledit faisceau de visée à une fréquence telle que la persistance rétinienne dudit opérateur soit conservée.

Ainsi, lorsque le passage du faisceau laser en direction d'une cible est possible, la visée est occultée et inversement. On évite donc tout risque que l'oeil de l'opérateur soit en contact avec le faisceau laser. Il est donc bien protégé. En outre, la visée étant possible à des intervalles de temps réguliers, très proches les uns des autres, de façon à conserver la persistance rétinienne de l'opérateur, l'opérateur a l'impression de voir en continu la cible. L'avantage est donc double : d'une part, l'oeil est protégé ; d'autre part, la visée est continue et permet le tir laser en rafale.

De façon à déterminer précisément la fréquence d'occultation du faisceau de visée et du faisceau laser, il est avantageux que l'élément mobile soit un corps rotatif ne permettant le passage de chacun des deux faisceaux, de manière alternative, qu'une seule fois par tour de rotation. On peut, par conséquent, déterminer de façon très précise, en fonction de la vitesse de rotation du corps rotatif, le nombre de faisceaux de visée perçus par l'oeil pendant une durée déterminée. Ce nombre est choisi de telle sorte que la persistance rétinienne de l'opérateur soit maintenue. On a trouvé qu'une vitesse de rotation supérieure à 25 tr/s permet d'obtenir un tel résultat.

Par ailleurs, ledit dispositif laser comporte, de façon avantageuse, des moyens de synchronisation, déclenchés par un organe de sécurité actionnable par l'opérateur et ne permettant audit opérateur de déclencher la source laser que lorsque l'élément mobile n'occulte pas le faisceau laser. On empêche ainsi des tirs qui se produiraient alors que ledit élément mobile occulterait le faisceau laser. On évite les risques de détériorations que pourrait causer un tel faisceau laser à l'intérieur du dispositif, l'énergie contenue dans un tel faisceau étant généralement très importante. Tout au moins, on évite un échauffement inutile du dispositif. Lesdits moyens de synchronisation, dont l'action varie en fonction de l'occultation du faisceau laser, sont, de façon avantageuse, sensibles à la rotation de l'élément mobile qui est responsable de cette occultation. Par conséquent, l'organe de sécurité déclenchant lesdits moyens de synchronisation peut servir à déclencher la rotation dudit élément mobile.

De façon avantageuse, l'invention prévoit, en outre, une liaison, par exemple une liaison mécanique, entre l'organe de sécurité déclenchant les moyens de synchronisation et l'organe d'actionnement déclenchant la source laser.

Cette liaison ne permet l'actionnement de l'organe de déclenchement et, par conséquent, le tir laser, que lorsque l'organe de sécurité est actionné.

La caractéristique précédente présente un double avantage :
- d'une part, elle n'autorise l'émission laser que lorsque les moyens de synchronisation et l'élément mobile sont actionnés ; autrement dit, l'émission laser n'est possible que lorsque ces moyens de sécurité, dont les avantages ont été mentionnés auparavant, sont activés ;
- d'autre part, une double manipulation de l'opérateur est exigée pour déclencher le laser : il doit d'abord actionner l'organe de sécurité, puis actionner l'organe de déclenchement ; on évite ainsi un déclenchement intempestif du dispositif laser, à la suite d'un actionnement malencontreux de l'organe de déclenchement de la source laser.

Selon un mode de réalisation appliqué à une arme de type fusil laser, l'organe de sécurité est un contact de visée et l'organe d'actionnement est une gâchette. Le contact de visée est actionné par la pression de la tête de l'opérateur quand celui-ci se met en position de visée, par exemple par la joue ou par le menton ; différentes situations peuvent être envisagées en fonction du mode de réalisation. On évite ainsi à l'opérateur de faire des mouvements trop importants pouvant perturber la visée.

Par ailleurs, il peut être avantageux de regrouper en une seule pièce les différents éléments du dispositif conforme à l'invention, ladite pièce pouvant, par exemple, être supportée par un bloc, par exemple en alliage léger usiné dans une masse. Ceci permet d'avoir un dispositif facilement transportable, et par exemple résistant au choc, si le bloc qui supporte la pièce est constitué d'un matériau approprié.

Les figures du dessin annexé feront bien comprendre comment l'invention peut être réalisée. Sur ces figures, des références identiques désignent des éléments semblables.

La figure 1 est une vue schématique d'un mode de réalisation du dispositif conforme à la présente invention, dans sa position pour laquelle le faisceau laser est occulté et la visée est dégagée.

La figure 2 montre schématiquement le dispositif de la figure 1, dans sa position pour laquelle le faisceau de visée est occulté et le faisceau laser peut passer.

La figure 3 est une vue, suivant la direction F de la figure 2, de l'élément mobile.

La figure 4 montre une liaison mécanique entre une gâchette et un contact de visée en position de repos.

La figure 5 montre la même liaison mécanique que la figure 4, mais en position de travail.

La figure 6 est un schéma montrant les liaisons entre l'organe de déclenchement de la source laser et les différents moyens de sécurité.

La figure 7 illustre une application du dispositif conforme à la présente invention.

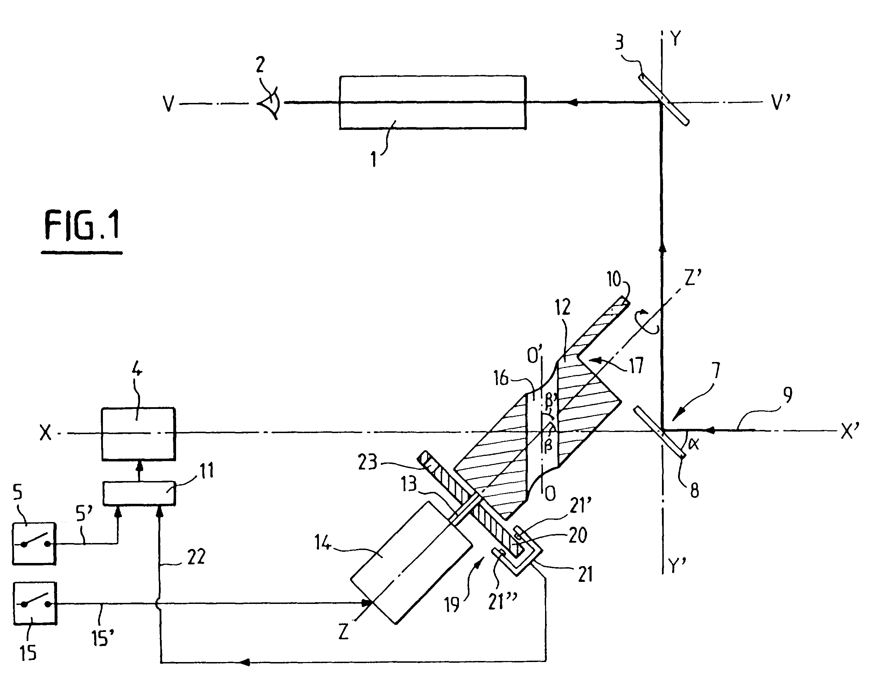

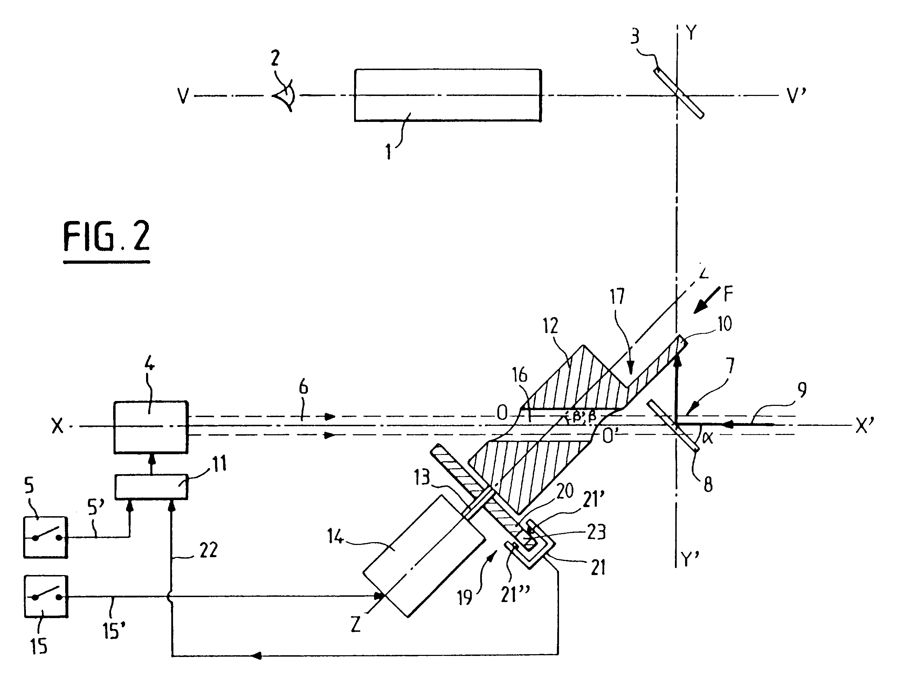

Le dispositif laser à visée optique, conforme à la présente invention et représenté sur les figures 1 et 2, comporte un système de visée optique 1, du type lunette de visée, d'axe optique V-V'. Un oeil 2 d'un opérateur qui utilise ledit dispositif peut être placé sur l'axe optique V-V', derrière ledit système de visée 1.

Ledit dispositif laser à visée optique comporte également une source laser 4, déclenchée par un dispositif de commande Il commandé par un organe d'actionnement 5 et susceptible d'émettre vers une cible (non représentée), un faisceau laser 6 d'axe X-X' (voir la figure 2).

Un miroir semi-transparent 8, laissant passer ledit faisceau laser 6, est placé sur l'axe X-X'. Ledit miroir semi-transparent 8 fait un angle α avec l'axe X-X', de manière à renvoyer, suivant l'axe Y-Y', un faisceau optique de visée 9 d'axe X-X', provenant de la cible. Ledit miroir semi-transparent 8 se trouve au point d'intersection 7 des axes X-X' et Y-Y'. Un miroir fixe 3 est placé sur l'axe Y-Y', de manière à renvoyer ledit faisceau de visée 9 d'axe Y-Y', suivant l'axe V-V', dans le système de visée 1, à travers lequel il est adressé à l'oeil 2 de l'opérateur.

Par ailleurs, ledit dispositif laser à visée optique comporte un élément mobile 12 placé au voisinage du point d'intersection 7. Ledit élément mobile 12 est susceptible d'occulter le faisceau de visée 9 en coupant l'axe Y-Y', entre le miroir fixe 3 et le miroir semi-transparent 8, au voisinage dudit point d'intersection 7.

En outre, ledit élément mobile 12 est susceptible d'occulter le faisceau laser 6 en coupant l'axe X-X', entre la source laser 4 et le miroir semi-transparent 8, au voisinage du point d'intersection 7.

Ledit élément mobile 12, la source laser 4, le système de visée 1, le miroir fixe 3 et le miroir semi-transparent 8 sont mécaniquement solidaires.

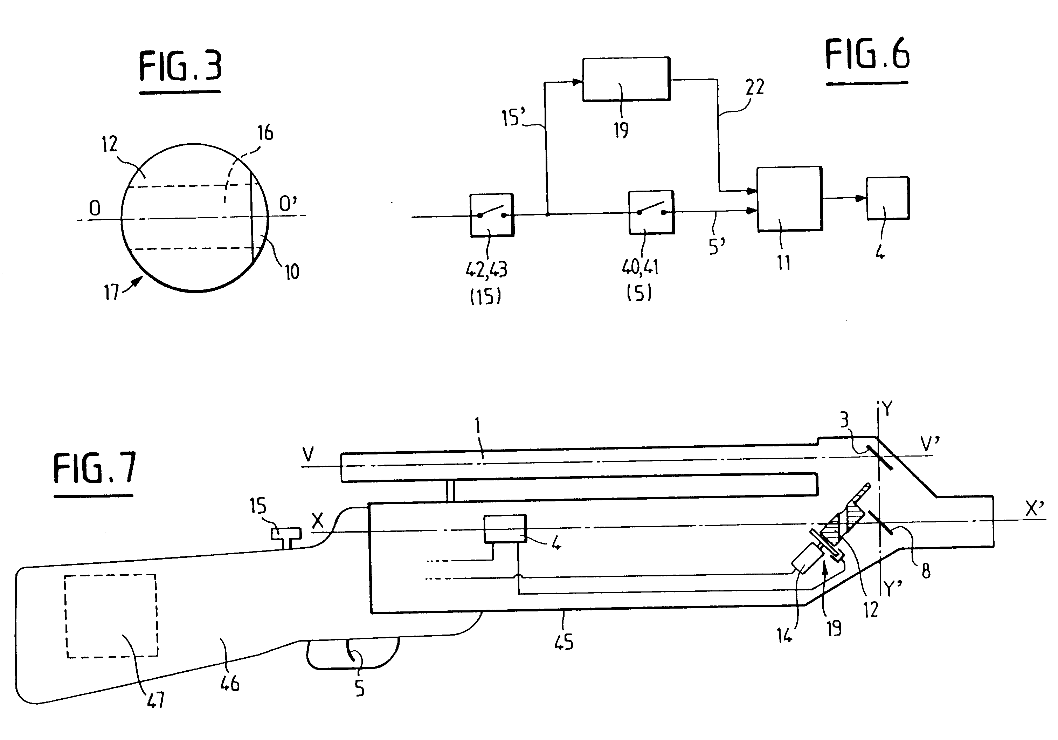

Comme le montrent les figures 2 et 3, ledit élément mobile 12 est un corps cylindrique, monté coaxialement sur un arbre 13 et entraîné selon un mouvement rotatif par un moteur 14, de préférence un moteur électrique.

Ledit moteur électrique 14 est déclenché par un contact 15, actionnable par un opérateur utilisant ce dispositif qui, comme on le verra par la suite, sert d'organe de sécurité.

L'axe de rotation Z-Z' dudit élément mobile 12 fait un angle β avec l'axe X-X'. Avantageusement, lesdits angles α et β sont tous deux égaux à 45°.

Ledit élément mobile 12 présente un orifice traversant 16, de diamètre légèrement supérieur au diamètre du faisceau laser 6, et d'axe O-O'. L'axe O-O' fait un angle β', de même valeur que l'angle β, avec l'axe de rotation Z-Z' de l'élément mobile, de sorte que, dans la position représentée sur la figure 2, l'axe O-O' soit confondu avec l'axe X-X'.

Ledit corps rotatif présente à son extrémité libre une échancrure 17 laissant subsister une palette 10 en saillie, excentrée par rapport à l'axe de rotation Z-Z' et parallèle audit axe de rotation Z-Z', permettant le passage du faisceau de visée lorsque l'élément mobile se trouve dans la position représentée par la figure 1.

A chaque tour de rotation, l'orifice traversant 16 se trouve une fois coaxial à l'axe X-X' et en regard de la source laser 4, comme représenté sur la figure 2, permettant alors le passage du faisceau laser 6 en direction de la cible. Dans cette position, la palette 10 coupe l'axe Y-Y', occultant les faisceaux de même axe. Aucun faisceau, et en particulier le faisceau laser réfléchi par la cible, ne peut alors atteindre l'oeil 2 de l'opérateur qui est, par conséquent, protégé de ces rayonnements nocifs.

Pendant sa rotation, l'élément mobile 12 s'écarte de la position représentée sur la figure 2 en direction de la position représentée sur la figure 1.

Lorsqu'il arrive dans cette dernière position, ladite palette 10, qui fait saillie à l'extrémité libre dudit élément mobile 12, ne se trouve plus sur l'axe Y-Y', permettant ainsi au faisceau de visée 9 réfléchi par le miroir semi-transparent 8 d'atteindre le miroir fixe 3 et de rendre la visée possible. Quant au faisceau laser 6, s'il était émis, il serait occulté, étant donné que l'orifice traversant 16 n'est plus coaxial à l'axe X-X' et ne se trouve plus en regard de la source laser 4. Mais, comme on le verra ci-après, dans une telle position, l'émission laser est rendue impossible.

Lors de sa rotation, l'élément mobile 12 occulte donc alternativement le faisceau laser 6 et le faisceau de visée 9.

La rotation se fait à une vitesse telle que les faisceaux de visée successifs arrivant à l'oeil assurent la persistance rétinienne de l'opérateur. Avantageusement, ledit élément mobile 12 tourne à une vitesse supérieure à 25 tr/s.

Des moyens de synchronisation 19 de l'émission laser, constitués par exemple d'un disque 20 et d'un détecteur opto-électronique 21, sont reliés par une liaison 22 au dispositif de commande 11.

Ledit dispositif de commande 11 déclenche l'émission laser, comme on le verra par la suite, si deux conditions sont remplies : l'organe d'actionnement 5 doit avoir donné l'ordre de déclenchement par la liaison 5' et les moyens de synchronisation 19 doivent avoir confirmé cet ordre par la liaison 22. Ladite confirmation de l'ordre de déclenchement provient de l'activation du détecteur opto-électronique 21.

Ledit détecteur opto-électronique 21 est un corps fixe comportant deux branches, dont l'une est munie d'un émetteur de lumière 21', et l'autre est munie d'un récepteur 21'' disposé en regard dudit émetteur.

Le disque 20 est calé sur l'arbre 13, entre le moteur 14 et l'élément mobile 12, tourne à la vitesse de ce dernier entre les branches du détecteur opto-électronique 21, coupant ainsi le faisceau de lumière.

Ledit disque 20 comporte un trou 23 disposé de manière à se trouver, lors de la rotation du disque et une fois par tour de rotation, en regard de l'émetteur de lumière 21' et du récepteur 21'', permettant le passage de la lumière. Le récepteur 21'' détecte alors le faisceau de lumière émis par l'émetteur 21' et le détecteur 21 est activé.

Les différents éléments sont disposés de sorte que le trou 23 se trouve entre les branches du détecteur 21, en regard de l'émetteur de lumière 21' et du récepteur de lumière 21'', lorsque l'orifice traversant 16 est coaxial à l'axe X-X'. En d'autres termes, le détecteur opto-électronique 21 n'est activé que lorsque le passage au niveau de l'élément mobile 12 est libre pour le faisceau laser 6.

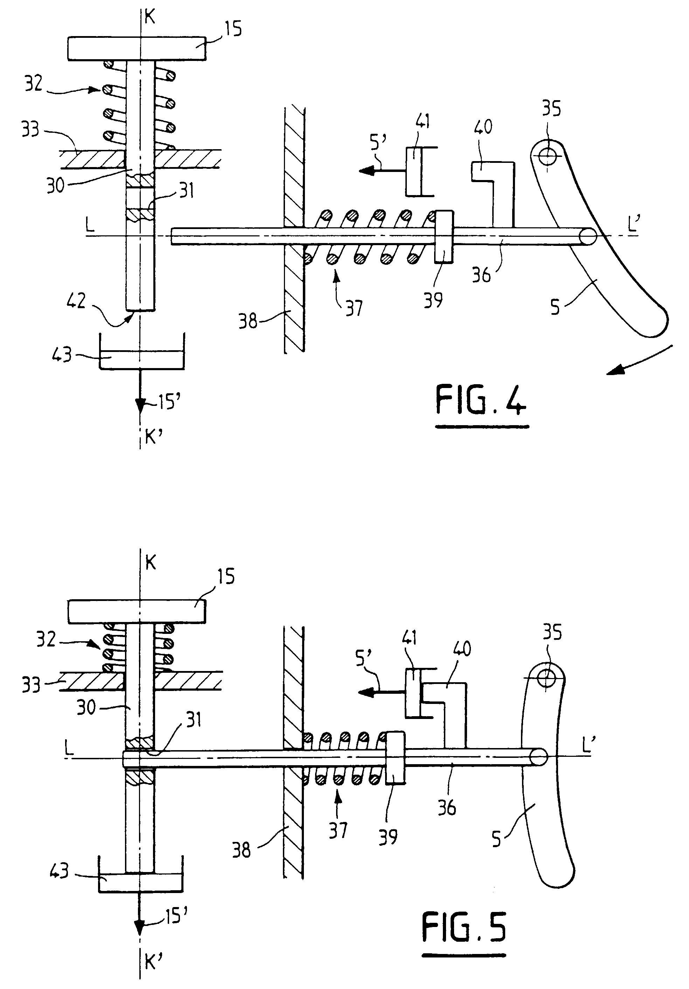

Sur les figures 4 et 5, on a représenté une liaison mécanique reliant l'organe d'actionnement déclenchant la source laser constitué d'une gâchette 5 à l'organe de sécurité déclenchant les moyens de synchronisation constitué d'un contact de visée 15.

Sur la figure 4, lesdits organes ne sont pas actionnés : ils se trouvent dans leur position de repos. Par contre, sur la figure 5, ils sont actionnés et se trouvent donc dans leur position de travail.

Le contact de visée 15 est muni d'une tige centrale 30, d'axe K-K', comportant un orifice 31 transversal audit axe K-K'. Ledit contact de visée 15, susceptible de se déplacer suivant l'axe K-K', est maintenu dans sa position de repos par un système de ressorts 32 s'appuyant sur un support fixe 33, par exemple la crosse d'un fusil, et repoussant ledit contact de visée 15 vers l'extérieur.

En exerçant une pression sur le contact de visée, celui-ci se déplace suivant l'axe K-K'. Il se trouve dans sa position de travail, lorsque l'extrémité 42 de la tige centrale 30 arrive au niveau d'un détecteur opto-électronique 43 et active ledit détecteur.

L'activation du détecteur opto-électronique 43 entraîne le déclenchement des moyens de synchronisation 19 à travers la liaison 15'.

La gâchette 5 est susceptible d'être soumise à un déplacement circulaire autour d'un axe 35 par pression d'un doigt de l'opérateur. Elle est reliée à une tige 36 d'axe L-L' transversal à l'axe K-K', susceptible de se déplacer suivant ledit axe L-L'. Un système de ressorts 37, placé entre un support fixe 38 et un appui 39 agencé sur la tige 36, repousse ladite tige 36 suivant l'axe L-L', en direction de la gâchette 5 et, par là même, met la gâchette 5 dans sa position de repos.

Quand le contact de visée 15 se trouve dans sa position de travail telle que représentée sur la figure 5, l'orifice 31 se trouve en regard de la tige 36.

En exerçant, dans une telle position du contact de visée 15, une pression sur la gâchette 5, la tige 36 se déplace suivant l'axe L-L', à travers l'orifice 31. Ceci permet alors, à une branche 40 agencée sur la tige 36, d'atteindre un détecteur opto-électronique 41 afin de l'activer.

L'activation du détecteur opto-électronique 41 entraîne l'ordre de déclenchement de la source laser adressé au dispositif de commande 11 par la liaison 5'.

Tant que le contact de visée 15 ne se trouve pas dans sa position de travail, une telle activation est impossible car l'orifice 31 ne se trouve pas en regard de la tige 36, de sorte que l'extrémité de ladite tige 36 bute contre la tige centrale 30 du contact de visée 15. Le déplacement suivant l'axe L-L' est alors insuffisant pour permettre à la branche 40 d'atteindre le détecteur opto-électronique 41.

Par conséquent, pour pouvoir activer les deux détecteurs opto-électroniques 43 et 41, il faut, d'abord, exercer une pression sur le contact de visée 15 pour, d'une part, activer le détecteur 43 et, d'autre part, placer l'orifice 31 en regard de la tige 36. Il faut, ensuite, exercer une pression sur la gâchette 5 pour déplacer la tige 36 jusqu'à ce que la branche 40 arrive au niveau du détecteur 41.

La figure 6 est un schéma montrant les relations entre l'organe de déclenchement 5 de la source laser et les différents moyens de sécurité, lors du tir laser.

Quand l'opérateur se met en position de visée, il actionne l'organe de sécurité 15, par exemple le contact de visée dans le cas d'un fusil laser qui, d'une part active le détecteur opto-électronique 43, déclenchant ainsi les moyens de synchronisation 19 à travers la liaison 15', et, d'autre part, rend possible l'actionnement de l'organe de déclenchement 5, à travers la liaison mécanique qui relie les deux organes.

Quand l'opérateur a effectué sa visée et qu'il décide de déclencher le tir laser, il actionne l'organe de déclenchement 5, qui active le détecteur opto-électronique 41, adressant l'ordre de déclenchement au dispositif de commande 11 par la liaison 5'. Toutefois, le dispositif de commande 11 ne déclenche le tir laser que lorsque le détecteur opto-électronique 21 des moyens de synchronisation 19 est activé et que la confirmation de déclenchement est transmise audit dispositif de commande 11 par la liaison 22.

Dans le mode de réalisation de la figure 7, le dispositif de visée 1, l'élément mobile 12 avec son moteur 14, les moyens de synchronisation 19, la source laser 4, le miroir fixe 3 et le miroir semi-transparent 8 sont regroupés à l'intérieur d'une même pièce 45, qui peut par exemple être supportée par un bloc en alliage léger usiné dans une masse.

Le dispositif selon l'invention peut être appliqué à une arme du type fusil comprenant en plus de la pièce 45 une crosse 46 et un dispositif optique de sortie laser (non représenté). Selon le mode de réalisation de la figure 7, la gâchette 5 et le contact de visée 15 sont montés sur la crosse 46 qui comporte également un système d'alimentation 47 du dispositif laser.

Ledit système d'alimentation 47 est constitué de piles qui sont, suivant le mode de réalisation, soit directement placées à l'intérieur de la crosse, soit disposées dans un boîtier relié à la crosse de l'arme et susceptible, par exemple, d'être porté par l'utilisateur du dispositif, à l'aide d'un sac à dos.

## Revendications

1. Dispositif laser à visée optique comportant :
- une source laser (4) susceptible d'émettre un faisceau laser (6) ;
- un système optique de visée (1), traversé par un faisceau de visée (9), destiné à permettre à un opérateur de diriger ledit faisceau laser (6) vers une cible ;
- un dispositif de commande (11) susceptible de déclencher ladite source laser (4) en vue d'un tir, commandé par un organe d'actionnement (5), à la disposition dudit opérateur ; et
- un élément mobile (12) susceptible d'occulter ledit faisceau de visée (9) pendant un tir laser ;
caractérisé en ce que ledit élément mobile (12) est susceptible d'occulter également ledit faisceau laser (6) lorsque le faisceau de visée (9) n'est pas occulté par l'élément mobile (12) et en ce qu'il occulte alternativement ledit faisceau laser (6) et ledit faisceau de visée (9) à une fréquence telle que la persistance rétinienne dudit opérateur soit conservée.

2. Dispositif laser à visée optique selon la revendication 1,
caractérisé en ce que ledit élément mobile (12) est placé au voisinage du point d'intersection (7) dudit faisceau laser (6) et dudit faisceau de visée (9).

3. Dispositif laser à visée optique selon la revendication 2,
caractérisé en ce que ledit élément mobile (12), occultant alternativement ledit faisceau laser (6) et ledit faisceau de visée (9), est un corps rotatif.

4. Dispositif laser à visée optique selon la revendication 3,
caractérisé en ce que ledit corps rotatif présente un orifice traversant (16) destiné au passage dudit faisceau laser (6) et en ce que ledit orifice traversant (16) se trouve coaxial audit faisceau laser (6) et en regard de ladite source laser (4), une fois par tour de rotation dudit corps rotatif.

5. Dispositif laser à visée optique selon l'une des revendications 1 à 4,
caractérisé en ce que ledit dispositif comporte des moyens de synchronisation (19), déclenchés par un organe de sécurité (15) actionnable par l'opérateur, ne permettant audit opérateur de déclencher ladite source laser (4) que lorsque ledit élément mobile (12) n'occulte pas ledit faisceau laser (6).

6. Dispositif laser à visée optique selon la revendication 5,
caractérisé en ce que lesdits moyens de synchronisation (19) sont constitués d'un détecteur opto-électronique fixe (21) comportant un émetteur de lumière (21') et un récepteur de lumière (21'') placé en regard dudit émetteur, et d'un disque (20), tournant à la vitesse de rotation dudit corps rotatif entre ledit émetteur (21') et ledit récepteur (21''), présentant un trou (23), disposé de manière à se trouver, une fois par tour de rotation, en regard dudit émetteur de lumière (21') et de permettre le passage du faisceau lumineux émis par ledit émetteur vers le récepteur de lumière (21'').

7. Dispositif laser à visée optique selon la revendication 6,
caractérisé en ce que la vitesse de rotation dudit corps rotatif et desdits moyens de synchronisation est supérieure à 25 tr/s.

8. Dispositif laser à visée optique selon l'une des revendications 5, 6 ou 7,
caractérisé en ce qu'une liaison est prévue entre ledit organe de sécurité (15) déclenchant lesdits moyens de synchronisation et ledit organe d'actionnement (5) déclenchant ladite source laser, et en ce que ladite liaison ne permet l'actionnement dudit organe d'actionnement (5) que lorsque ledit organe de sécurité (15) est actionné.

9. Dispositif laser à visée optique selon la revendication 8,
caractérisé en ce que ledit organe de sécurité (15) est constitué d'un contact de visée et ledit organe d'actionnement (5) d'une gâchette et en ce que ladite liaison est une liaison mécanique.

10. Dispositif laser à visée optique selon la revendication 9,
caractérisé en ce que ledit contact de visée (15) est un corps mobile présentant un orifice (31), en ce que ladite gâchette (5) est reliée à une tige (36), susceptible de se déplacer sous l'effet de ladite gâchette (5) transversalement au déplacement dudit corps mobile et en ce que l'actionnement de ladite gâchette (5) n'est possible que lorsque ledit orifice (31) est placé en regard de ladite tige (36).

11. Dispositif laser à visée optique selon l'une des revendications 9 ou 10,
caractérisé en ce que ledit dispositif comporte des détecteurs opto-électroniques (41, 43) activés suivant les positions respectives de ladite gâchette (5) et dudit contact de visée (15).

12. Dispositif laser à visée optique selon l'une des revendications 5 à 11,
caractérisé en ce que ledit système de visée (1), ledit miroir fixe (3), ladite source laser (4), ledit miroir semi-transparent (8), ledit élément mobile (12) et lesdits moyens de synchronisation (19) sont regroupés en une seule pièce (45).

13. Dispositif laser à visée optique selon la revendication 12,
caractérisé en ce que ladite pièce (45) est supportée par un bloc en alliage léger usiné dans une masse.

## Patentansprüche

1. Optische Laserzielvorrichtung mit:
- einer Laserquelle (4) zur Abgabe eines Laserstrahls (6);
- einem optischen Zielsystem (1), durch das ein Zielstrahl (9) verläuft, durch den der Bediener den Laserstrahl (6) auf ein Ziel richten kann;
- einer Steuervorrichtung (11), durch die die Laserquelle (4) zur Abgabe eines Schusses ausgelöst werden kann und die durch ein Betätigungsorgan (5) gesteuert wird, das sich in Reichweite des Bedieners befindet, und
- einem beweglichen Element (12), durch das der Zielstrahl (9) während eines Laserschusses abgedunkelt werden kann,
dadurch gekennzeichnet, daß das bewegliche Element (12) ebenfalls den Laserstrahl (6) abdunkeln kann, wenn der Zielstrahl (9) nicht durch das bewegliche Element (12) abgedunkelt wird, und dadurch, daß es abwechselnd den Laserstrahl (6) und den Zielstrahl (9) in einer solchen Häufigkeit abdunkelt, daß die Persistenz des Netzhautbildes des Bedieners erhalten bleibt.

2. Optische Laserzielvorrichtung nach Anspruch 1,
dadurch gekennzeichnet, daß das bewegliche Element (12) in der Nähe des Schnittpunkts (7) des Laserstrahls (6) und des Zielstrahls (9) angeordnet ist.

3. Optische Laserzielvorrichtung nach Anspruch 2,
dadurch gekennzeichnet, daß das bewegliche Element (12), durch das abwechselnd der Laserstrahl (6) und der Zielstrahl (9) abgedunkelt werden, ein Rotationskörper ist.

4. Optische Laserzielvorrichtung nach Anspruch 3,
dadurch gekennzeichnet, daß der Rotationskörper eine Durchgangsöffnung (16) hat, durch die der Laserstrahl (6) verläuft, und dadurch, daß sich die Durchgangsöffnung (16) einmal pro Umdrehung des Rotationskörpers koaxial zum Laserstrahl (6) gegenüber der Laserquelle (4) befindet.

5. Optische Laserzielvorrichtung nach einem der Ansprüche 1 bis 4,
dadurch gekennzeichnet, daß die Vorrichtung Synchronisationsmittel (19) hat, die durch ein Sicherheitsorgan (15) ausgelöst werden, das vom Bediener betätigt wird und eine Auslösung der Laserquelle (4) durch den Bediener nur erlaubt, wenn das bewegliche Element (12) den Laserstrahl (6) nicht abgedunkelt hat.

6. Optische Laserzielvorrichtung nach Anspruch 5,
dadurch gekennzeichnet, daß die Synchronisationsmittel (19) aus einem feststehenden optoelektronischen Detektor (21) mit einem Lichtemitter (21') und einem Lichtempfänger (21") gegenüber dem Emitter sowie einer Scheibe (20) bestehen, die sich mit der Drehgeschwindigkeit des Rotationskörpers zwischen dem Emitter (21') und dem Empfänger (21") dreht, eine Bohrung (23) hat, die so angeordnet ist, daß sie sich einmal pro Umdrehung gegenüber dem Lichtemitter (21') befindet, so daß das vom Emitter abgegebene Lichtbündel zum Lichtempfänger (21") gelangen kann.

7. Optische Laserzielvorrichtung nach Anspruch 6,
dadurch gekennzeichnet, daß die Drehgeschwindigkeit des Rotationskörpers und der Synchronisationsmittel größer als 25 U/s ist.

8. Optische Laserzielvorrichtung nach einem der Ansprüche 5, 6 oder 7,
dadurch gekennzeichnet, daß zwischen dem Sicherheitsorgan (15) zur Auslösung der Synchronisationsmittel und dem Betätigungsorgan (5) zur Auslösung der Laserquelle eine Verbindung vorgesehen ist, und dadurch, daß die Verbindung die Betätigung des Betätigungsorgans (5) nur ermöglicht, wenn das Sicherheitsorgan (15) betätigt ist.

9. Optische Laserzielvorrichtung nach Anspruch 8,
dadurch gekennzeichnet, daß das Sicherheitsorgan (15) aus einem Zielkontakt und das Betätigungsorgan (5) aus einem Abzugshebel besteht, und dadurch, daß die Verbindung eine mechanische Verbindung ist.

10. Optische Laserzielvorrichtung nach Anspruch 9,
dadurch gekennzeichnet, daß der Zielkontakt (15) ein beweglicher Körper mit einer Öffnung (31) ist, dadurch, daß der Abzugshebel (5) mit einer Stange (36) verbunden ist, die sich durch den Abzugshebel (5) quer zur Bewegung des beweglichen Körpers verschieben kann, und dadurch, daß die Betätigung des Abzugshebels (5) nur möglich ist, wenn sich die Öffnung (31) gegenüber der Stange (36) befindet.

11. Optische Laserzielvorrichtung nach einem der Ansprüche 9 oder 10,
dadurch gekennzeichnet, daß die Vorrichtung optoelektronische Detektoren (41, 43) hat, die entsprechend den jeweiligen Stellungen des Abzugshebels (5) und des Zielkontakts (15) aktiviert werden.

12. Optische Laserzielvorrichtung nach einem der Ansprüche 5 bis 11,
dadurch gekennzeichnet, daß das Zielsystem (1), der feste Spiegel (3), die Laserquelle (4), der halbdurchlässige Spiegel (8), das bewegliche Element (12) und die Synchronisationsmittel (19) zu einem einzigen Teil (45) zusammengefaßt sind.

13. Optische Laserzielvorrichtung nach Anspruch 12,
dadurch gekennzeichnet, daß sich das Teil (45) auf einem Block aus einer Leichtmetallegierung in einer Masse befindet.

## Claims

1. Optical sight laser device including:
- a laser source (4) capable of emitting a laser beam (6);
- an optical sight system (1), through which a sight beam (9) passes, intended to allow an operator to direct the said laser beam (6) towards a target;
- a control device (11) capable of triggering the said laser source (4) with a view to firing, initiated by an actuating member (5), at the disposal of the said operator; and
- a movable element (12) capable of occulting the said sight beam (9) during laser firing;
characterized in that the said movable element (12) is capable of also occulting the said laser beam (6) when the sight beam (9) is not occulted by the movable element (12), and in that it occults alternately the said laser beam (6) and the said sight beam (9) at a frequency such that the said operator's retinal persistence is maintained.

2. Optical sight laser device according to Claim 1, characterized in that the said movable element (12) is placed in the vicinity of the point of intersection (7) of the said laser beam (6) and the said sight beam (9).

3. Optical sight laser device according to Claim 2, characterized in that the said movable element (12), occulting alternately the said laser beam (6) and the said sight beam (9), is a rotary body.

4. Optical sight laser device according to Claim 3, characterized in that the said rotary body has a through-orifice (16) intended for the said laser beam (6) to pass and in that the said through-orifice (16) lies coaxial with the said laser beam (6) and opposite the said laser source (4) once per rotation cycle of the said rotary body.

5. Optical sight laser device according to one of Claims 1 to 4, characterized in that the said device includes synchronization means (19) triggered by a safety member (15) actuatable by the operator, allowing the said operator to trigger the said laser source (4) only when the said movable element (12) does not occult the said laser beam (6).

6. Optical sight laser device according to Claim 5, characterized in that the said synchronization means (19) are constituted by a stationary optoelectronic detector (21), which includes a light emitter (21') and a light receiver (21") placed opposite the said emitter, and by a disc (20), rotating at the speed of rotation of the said rotary body between the said emitter (21') and the said receiver (21"), having a hole (23) located so as to lie, once per rotation cycle, opposite the said light emitter (21') and to allow the light beam emitted by the said emitter to pass towards the light receiver (21").

7. Optical sight laser device according to Claim 6, characterized in that the speed of rotation of the said rotary body and of the said synchronization means is greater than 25 rev/s.

8. Optical sight laser device according to one of Claims 5, 6 and 7, characterized in that a link is provided between the said safety member (15) triggering the said synchronization means and the said actuating member (5) triggering the said laser source and in that the said link allows actuation of the said actuating member (5) only when the said safety member (15) is actuated.

9. Optical sight laser device according to Claim 8, characterized in that the said safety member (15) is constituted by a sight contact and the said actuating member (5) by a trigger and in that the said link is a mechanical link.

10. Optical sight laser device according to Claim 9, characterized in that the said sight contact (15) is a movable body having an orifice (31), in that the said trigger (5) is connected to a rod (36) capable of moving under the effect of the said trigger (5) transversely to the movement of the said movable body and in that the actuation of the said trigger (5) is possible only when the said orifice (31) is placed opposite the said rod (36).

11. Optical sight laser device according to one of Claims 9 and 10, characterized in that the said device includes optoelectronic detectors (41, 43) activated in the respective positions of the said trigger (5) and of the said sight contact (15).

12. Optical sight laser device according to one of Claims 5 to 11, characterized in that the said sight system (1), the said stationary mirror (3), the said laser source (4), the said semi-transparent mirror (8), the said movable element (12) and the said synchronization means (19) are assembled into a single component (45).

13. Optical sight laser device according to Claim 12, characterized in that the said component (45) is supported by a block made of light alloy machined from solid.
